# EUROPÄISCHE PATENTSCHRIFT

(11) **EP 1 913 678 B1**
(45) Veröffentlichungstag und Bekanntmachung des Hinweises auf die Patenterteilung: **30.11.2011**
(21) Anmeldenummer: 06777978.5
(22) Anmeldetag: 26.07.2006
(51) Int. Cl.: H02K 15/085

(54) **VERFAHREN ZUR BEWICKLUNG EINER ELEKTRISCHEN MASCHINE UND WICKELHILFSKÖRPER**
METHOD FOR CARRYING OUT A WINDING PROCESS IN AN ELECTRICAL MACHINE, AND AUXILIARY WINDING BODY
PROCEDE POUR REALISER UN ENROULEMENT DANS UNE MACHINE ELECTRIQUE, ET CORPS D'ASSISTANCE A L'ENROULEMENT

(30) Priorität: 08.08.2005 DE 102005037375
(43) Veröffentlichungstag der Anmeldung: 23.04.2008
(73) Patentinhaber: SIEMENS AKTIENGESELLSCHAFT, 80333 München (DE)
(72) Erfinder: LYSCHICK, Eduard, 97616 Bad Neustadt (DE); MAHLMEISTER, Fridolin, 97702 Münnerstadt (DE); MENZ, Michael, 97618 Hohenroth (DE); WÖHNER, Norbert, 97618 Heustreu (DE)
(86) Internationale Anmeldenummer: PCT/EP2006/064667
(87) Internationale Veröffentlichungsnummer: WO 2007/017380

(56) Entgegenhaltungen:
- DE-B- 1 170 526
- DE-B- 1 257 268
- FR-A1- 2 569 503
- GB-A- 1 048 719
- GB-A- 1 060 738
- JP-A- 60 148 360
- US-A- 3 441 228

## Beschreibung

Die Erfindung betrifft ein Verfahren zur Bewicklung einer elektrischen Maschine, die eine Drehachse und einen Grundkörper mit zwei axialen Stirnseiten sowie mit Nuten zur Aufnahme von elektrischen Leitern eines Wicklungssystems enthält, wobei die Nuten an den Stirnseiten jeweils eine Nutstirnöffnung aufweisen. Außerdem betrifft die Erfindung einen Wickelhilfskörper zur Durchführung des Verfahrens.

Ein derartiges Verfahren kommt beispielsweise zur Bewicklung eines als Ständer oder Ständer-Blechpaket ausgeführten Grundkörpers zum Einsatz. Neuerdings erfolgt das Bewickeln mit einem sogenannten Nadelwickler,' wobei eine Wickeldüse des Nadelwicklers einen elektrischen Leiter im Inneren einer Ständerbohrung in eine der Nuten einlegt und sich in axialer Richtung, d. h. in Richtung der Drehachse, fortbewegt. An der Stirnseite wird die Wickeldüse (= Nadel) zunächst noch ein Stück in axialer Richtung nach außen bewegt. Danach wird das Ständer-Blechpaket so weit um die Drehachse gedreht, bis die Nutstirnöffnung derjenigen Nut auf Höhe der Wickeldüse erscheint, in der der elektrische Leiter in umgekehrter Richtung innerhalb der Ständerbohrung zurückgeführt wird. Auf der gegenüberliegenden Stirnseite läuft der Vorgang spiegelbildlich ab. Dies wird entsprechend der gewünschten Windungszahl wiederholt, so dass sich an beiden Stirnseiten Wickelköpfe ausbilden.

Das Wicklungssystem kann mehrere Teilwicklungen umfassen, die nacheinander mit dem beschriebenen Verfahren in das Ständer-Blechpaket eingebracht werden. Dabei ist die Umlenk-Weglänge an den Stirnseiten bei später eingebrachten Teilwicklungen größer als bei den zuerst gefertigten Teilwicklungen. Dadurch weichen die mittleren Spulenlängen der einzelnen Teilwicklungen voneinander ab. Außerdem steigt der Materialeinsatz bei den später eingebrachten Teilwicklungen, wodurch die einzelnen Teilwicklungen auch Unterschiede hinsichtlich ihres elektrischen Widerstandes aufweisen können.

Diese unerwünschten Folgen lassen sich mittels gesteuerter Fangelemente an beiden Stirnseiten kompensieren. Deren Einsatz ist jedoch sehr aufwändig und verlangsamt die Taktzeit des Wickelvorgangs.

Darüber hinaus kann sich beim Umlenken des elektrischen Leiters im Bereich der Stirnseiten eine hohe Zugspannung ausbilden, die zu einer unzulässigen Dehnung und daraus resultierend zu einer Querschnittsverjüngung des elektrischen Leiters führen kann. Außerdem kann der elektrische Leiter auch beschädigt werden.

Aus der DE 12 57 268 B, der DE 11 70 526 B, der GB 1 048 719 A, der JP 60 148360 A, der GB 1 060 738 A und der US 3,441,228 A sind jeweils Verfahren zur Bewicklung eines Stators einer elektrischen Maschine bekannt, bei denen der jeweilige Stator nach innen offene Nuten aufweist, in die Spulen eingewickelt werden. Dazu werden an den Stirnseiten jeweils Wickelhilfskörper angeordnet, die beispielsweise auch mehrere Nutöffnungen abdecken können. Die Wickelhilfskörper weisen jeweils einen axialen Befestigungsfortsatz auf, mit dem sie zur Anordnung an der Stirnseite in eine Öffnung des Stators, beispielsweise in die Nuten des Stators oder in die Statorbohrung, eingesteckt werden. Die elektrischen Leiter der Spulen werden in die Nuten eingewickelt, so dass an den Stirnseiten Wickelköpfe gebildet werden. Nach Fertigstellung der Wicklung werden die Wickelhilfskörper jeweils wieder entfernt.

Weiterhin ist aus der FR 2 569 503 A1 ein Verfahren zum Bewickeln eines Stators einer elektrischen Maschine bekannt, bei dem Wickelhilfskörper auf einen stirnseitigen Wicklungsträger aufgesteckt werden.

Eine Aufgabe der Erfindung besteht deshalb darin, ein Verfahren der eingangs bezeichneten Art anzugeben, das sich einfach durchführen lässt und mit dem eine hochwertige Bewicklung im Bereich der Stirnseiten erzielt werden kann.

Diese Aufgabe wird gelöst durch die Merkmale des unabhängigen Patentanspruchs 1.

Durch den beim erfindungsgemäßen Verfahren eingesetzten Wickelhilfskörper werden die bislang im Zusammenhang mit Nadelwicklern auftretenden Schwierigkeiten bei der Bewicklung im Stirnbereich vermieden. Der Wickelhilfskörper ist ein einfaches Werkzeug, das sich problemlos vor dem Beginn des eigentlichen Wickelvorgangs an den Stirnseiten anbringen und nach Abschluss auch ebenso einfach wieder entfernen lässt. Sein Einsatz ist also mit geringem technischen Aufwand verbunden. Dabei kann der Wickelvorgang einen Teil der Wicklung oder auch die gesamte Wicklung betreffen.

Die Umlenkung der elektrischen Leiter erfolgt an der Stirnseite mittels dieses vorteilhaften Wickelhilfskörpers. Der elektrische Leiter wird dabei auf der Oberfläche des Wickelhilfskörpers insbesondere gleitend, d.h. mit einem vergleichsweise niedrigen Reibungskoeffizienten, und insbesondere unter Einhaltung einer vorgegebenen Zugspannung geführt. Dadurch werden zu hohe Zugspannungen vermieden. Der elektrische Leiter erfährt keine unerwünschte Querschnittsverjüngung und keine Beschädigung beispielsweise seiner elektrischen Isolation. Die Führung des elektrischen Leiters kann dabei in Umfangsrichtung - also um den Wickelkörper herum - oder/und zumindest teilweise auch in axialer Richtung - also über den Wickelhilfskörper hinweg - erfolgen.

Weiterhin ermöglicht der Wickelhilfskörper ein kontrolliertes Anordnen der einzelnen Lagen der elektrischen Leiter, wodurch eine definierte Ausgestaltung des Wickelkopfs an der Stirnseite resultiert. Insbesondere können auf diese Weise auch nacheinander eingebrachte Teilwicklungen mit im Wesentlichen gleichen Windungslängen und im Wesentlichen gleichen elektrischen Widerständen hergestellt werden.

Insgesamt führt der erfindungsgemäße Einsatz des Wickelhilfskörpers also zu einer sehr präzisen und hochwertigen Bewicklung. Insbesondere wird verglichen mit einer Bewicklung ohne Wickelhilfskörper eine Reduzierung der mittleren Spulenlänge erreicht. Dies führt zu einer Verbesserung der elektrischen Betriebsdaten der elektrischen Maschine bei gleichzeitig reduziertem Materialeinsatz.

An der Stirnseite wird eine Endscheibe mit mindestens einem axial vorstehenden Trennelement, beispielsweise in Form eines Trennstegs oder Trennstifts oder Fingers, angeordnet. Der Wickelhilfskörper weist mindestens eine axiale Befestigungsaussparung auf, mit der er zur Anordnung an der Stirnseite auf das insbesondere im Überbrückungsbereich vorgesehene Trennelement aufgesteckt wird. Der so platzierte Wickelhilfskörper schützt die Trennelemente, die insbesondere aus einem isolierenden Kunststoffmaterial bestehen, vor einem Verbiegen und/oder einer Beschädigung aufgrund der Zugspannung der elektrischen Leiter. Ebenso verhindert der Wickelhilfskörper eine Beschädigung der elektrischen Leiter durch eine zu hohe mechanische Reibung an dem Trennelement.

Vorteilhafte Ausgestaltungen des erfindungsgemäßen Verfahrens ergeben sich aus den Merkmalen der von Anspruch 1 abhängigen Ansprüche.

Vorzugsweise kann zwischen der Stirnseite und dem Wickelhilfskörper im Überbrückungsbereich ein insbesondere elektrisch isolierendes und beispielsweise ein U- oder L-Profil aufweisendes erstes Führungselement platziert werden, in dem die elektrischen Leiter nach der Führung mittels des Wickelhilfskörpers zu liegen kommen. Nach der Umlenkung und Führung der elektrischen Leiter mittels des Wickelhilfskörpers gleiten sie in das erste Führungselement. Diese Verlegung der elektrischen Leiter erfolgt ohne störende Einwirkung von Querkräften auf das Führungselement. Insbesondere werden ein unerwünschtes seitliches Verschieben des Führungselements und eine ansonsten dadurch mögliche Beeinträchtigung der elektrischen Isolationsfunktion verhindert.

Vorzugsweise wird das erste Führungselement während der Herstellung der ersten Teilwicklung mittels des Wickelhilfskörpers in seiner Lage fixiert. Dadurch ergibt sich eine hohe Fertigungsgenauigkeit. Insbesondere ist die elektrische Isolierung zwischen den elektrischen Leitern benachbarter Teilwicklungen oder zwischen den elektrischen Leitern und dem Grundkörper aufgrund des lagefixierten Führungselements gewährleistet.

Weiterhin ist es vorteilhaft, wenn nach Fertigstellung der ersten Teilwicklung axial angrenzend an das erste Führungselement ein weiteres Führungselement zur Aufnahme der elektrischen Leiter einer weiteren Teilwicklung platziert' wird. Dadurch lassen sich Teilwicklungen mit sehr eng benachbarter axialer Stapelung an den Stirnseiten des Grundkörpers anordnen. Es resultiert ein kompakter Aufbau mit einer geringen Abmessung in axialer Richtung.

Bevorzugt ist es, dass am weiteren Führungselement ein weiterer Wickelhilfskörper angeordnet wird, mittels dessen während der Herstellung der weiteren Teilwicklung die elektrischen Leiter geführt werden. Es ergeben sich im Wesentlichen die gleichen Vorteile wie bereits im Zusammenhang mit dem gemäß Anspruch 1 eingesetzten ersten Wickelhilfskörper beschrieben.

Eine weitere Aufgabe der Erfindung besteht darin, einen Wickelhilfskörper zur Durchführung des eingangs bezeichneten Verfahrens anzugeben, der eine hochwertige Bewicklung im Bereich der Stirnseiten ermöglicht.

Diese Aufgabe wird gelöst durch die Merkmale des Patentanspruchs 6.

Die glatte Außenwand und die abgerundeten Außenwandkanten verhindern während der Führung der elektrischen Leiter um den Wickelhilfskörper eine hohe Zugspannung. Vielmehr erfolgt die Führung weitgehend gleitend mit einem sehr niedrigen Reibungskoeffizienten. Dadurch werden unzulässige Dehnungen und daraus resultierende Querschnittsverjüngungen sowie eine Beschädigung des elektrischen Leiters vermieden. So entsteht eine sehr hochwertige Bewicklung.

Insbesondere kann der Wickelhilfskörper aus einem metalli-' schen Material, beilspielsweise aus Aluminium, hergestellt sein. Dadurch lassen sich die glatte Außenwand und auch die abgerundeten Außenwandkanten ohne großen technischen Aufwand herstellen. Weiterhin nimmt der Wickelhilfskörper insbesondere die Gestalt eines Kreisbogenabschnitts an. Dadurch ist er an die üblicherweise zylinderförmige Geometrie des Grundkörpers angepasst.

Der Wickelhilfskörper weist an seiner Unterseite Befestigungsmittel auf. Es ist eine axiale Befestigungsaussparung vorgesehen, die sich ausgehend von der Unterseite in den Wickelhilfskörper hineinerstreckt. Dadurch ist eine einfache Anbringung an der Stirnseite des Grundkörpers möglich. Insbesondere lässt sich diese vorübergehende mechanische Verbindung nach Beendigung des Wickelvorgangs auch leicht wieder lösen.

Vorteilhafte Ausgestaltungen des erfindungsgemäßen Wickelhilfskörper ergeben sich aus den Merkmalen der von Anspruch 6 abhängigen Ansprüche.

Bei einer vorteilhaften Ausgestaltung ist eine annährend senkrecht zur Außenwand verlaufende Unterseite des Wickelhilfskörpers zumindest teilweise als Anlagefläche für ein Führungselement der elektrischen Leiter ausgebildet. Ein Zusammenwirken des Wickelhilfskörpers und dieses Führungselements führt zu einer besonders günstigen Bewicklung des Grundkörpers.

Weiterhin ist es bevorzugt, dass die Anlagefläche als Vertiefung an der Unterseite ausgebildet ist. Damit lässt sich das erste Führungselement in seiner Lage fixieren, so dass es während des Wickelvorgangs nicht verschoben werden kann. Die Wickelköpfe auf beiden Stirnseiten können so besonders genau und vor allem auch vorhersagbar und reproduzierbar hergestellt werden. Es sind keine Sicherheitstoleranzen vorzusehen, wodurch auch eine bis an die zulässigen Grenzen reichende Dimensionierung der elektrischen Maschine möglich ist.

Weiterhin ist es günstig, wenn die Außenwand des Wickelhilfskörpers einen Vorsprung aufweist, der sich über die Anlagefläche der Unterseite hinauserstreckt. Der elektrische Draht wird über diesen Vorsprung, der insbesondere die Gestalt einer Führungsnase annimmt, hinweggeführt und rutscht danach in das darunter angeordnete Führungselement. Damit ist eine sehr präzise und gleichmäßige Verlegung der elektrischen Leiter möglich, ohne dass sich eine unzulässig hohe Spule aufbaut. Der beispielsweise zur Einhaltung von Luft- und/oder Kriechstrecken erforderliche Abstand zum Gehäuse der elektrischen Maschine ist so gewährleistet.

Weitere Merkmale, Vorteile und Einzelheiten der Erfindung ergeben sich aus der nachfolgenden Beschreibung von Ausführungsbeispielen anhand der Zeichnung. Es zeigt:
- FIG 1: ein Ausführungsbeispiel eines zu bewickelnden Grundkörpers einer elektrischen Maschine mit an den Stirnseiten angeordneten Endscheiben in einer Draufsicht,
- FIG 2: den Grundkörper gemäß FIG 1 in einer Querschnittsdarstellung,
- FIG 3 und 4: ein Ausführungsbeispiel eines Führungselements und eines auf die Endscheibe gemäß FIG 1 während eines Wickelvorgangs aufgesetzten Wickelhilfskörpers,
- FIG 5: den an seiner Unterseite Befestigungsaussparungen aufweisenden Wickelhilfskörper gemäß FIG 3 und 4,
- FIG 6: ein Ausführungsbeispiel eines weiteren in Verbindung mit dem Wickelhilfskörper gemäß FIG 3 bis 5 eingesetzten Führungselements,
- FIG 7: das Führungselement gemäß FIG 6 in bewickeltem Zustand,
- FIG 8: ein Ausführungsbeispiel zweier bereits bewickelter Führungselemente gemäß FIG 6 und eines noch zu bewickelnden dritten Führungselements gemäß FIG 6 sowie eines auf die Endscheibe gemäß FIG 1 während eines dritten Teilwickelvorgangs aufgesetzten Wickelhilfskörpers,
- FIG 9: ein Ausführungsbeispiel'eines Wickelhilfskörpers mit einem Befestigungsfortsatz an seiner Unterseite und
- FIG 10 bis 12: Ausführungsbeispiele von Wickelhilfskörpern mit verschiedener Kreisbogenüberdeckung.

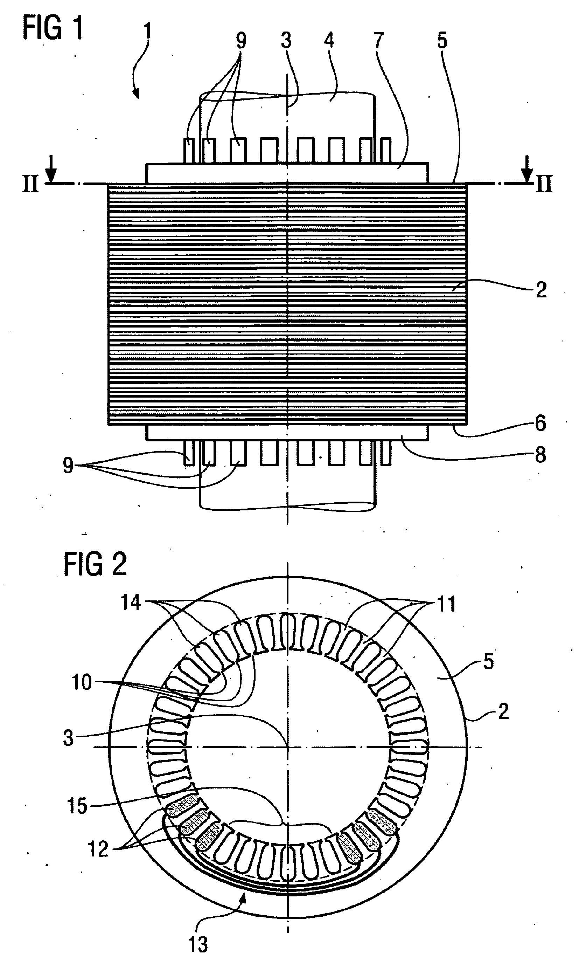

Einander entsprechende Teile sind in FIG 1 bis 12 mit denselben Bezugszeichen versehen.

In FIG 1 ist ein Ausführungsbeispiel einer als Elektromotor ausgeführten elektrischen Maschine 1 mit einem zu bewickelnden Grundkörper 2 und einem um eine Drehachse 3 drehbar gelagerten Läufer 4 dargestellt. Der Grundkörper 2 gehört zu einem Ständer der elektrischen Maschine 1 und ist als Ständer-Blechpaket ausgeführt. Er weist axiale Stirnseiten 5 und 6 auf, an denen jeweils eine elektrisch isolierende Endscheibe 7 bzw. 8 angeordnet ist. Die Endscheiben 7 und 8 weisen axial vorstehende und in Umfangsrichtung gleichmäßig verteilt angeordnete Trennstege 9 auf.

Gemäß der Querschnittsdarstellung von FIG 2 weist der Grundkörper 2 eine Ständerinnenbohrung auf, in der der in FIG 2 nicht eingetragene Läufer 4 platziert ist. Angrenzend an eine Innenwand dieser Ständerinnenbohrung sind axial verlaufende und über den Umfang gleichmäßig verteilte Nuten 10 im Grundkörper 2 vorgesehen. Gegebenenfalls kann der Nutverlauf abweichend von der exakt axialen Richtung eine leichte Schrägung aufweisen. Zwischen den Nuten 10 sind Nutstege 11 angeordnet.

Die isolierenden Endscheiben 7 und 8 sind so an den Stirnseiten 5 bzw. 6 angeordnet, dass ihre Trennstege 9 mit den Nutstegen 11 fluchten. Die Anzahl der Trennstege 9 und der Nutstege 11 ist gleich.

Innerhalb der Nuten 10 werden elektrische Leiter 12 eines in den Grundkörper 2 einzubringenden elektrischen Wicklungssystems 13 platziert. Im Ausführungsbeispiel gemäß FIG 2 ist der Grundkörper 2 in einem teilbewickelten Zustand gezeigt. Nur in einigen der Nuten 10 sind elektrische Leiter 12 angeordnet. An den Stirnseiten 5 und 6 weisen die Nuten 10 Nutstirnöffnungen 14 auf, aus denen die elektrischen Leiter 12 hervortreten, um außerhalb des Grundkörpers 2 an den Stirnseiten 5 und 6 umgelenkt und zu einer anderen der Nuten 10 geführt zu werden. Diese Umlenkung und Führung der elektrischen Leiter 12 erfolgt im Ausführungsbeispiel gemäß FIG 1 und 2 mittels der isolierenden Endscheiben 7 und 8. In FIG 2 ist diese Umlenkung und Leiterführung in einem schematisch angedeutet.

Die Endscheiben 7 und 8 sind universell einsetzbar. Mit ihnen lassen sich Wicklungssysteme 13 für verschiedene Polzahlen realisieren. Bei der Bewicklung des Grundkörpers 2 und auch der Endscheiben 7 und 8 mit den elektrischen Leitern 12 kann es zu hohen Zugspannungen und zu einer hohen Reibung zwischen den Trennstegen 9 und den elektrischen Leitern 12 kommen. Dies kann zum einen zu einem Verbiegen und/oder Beschädigen der Trennstege und zum anderen zu einer Beschädigung der elektrischen Leiter, beispielsweise deren elektrischer Isolierung, führen.

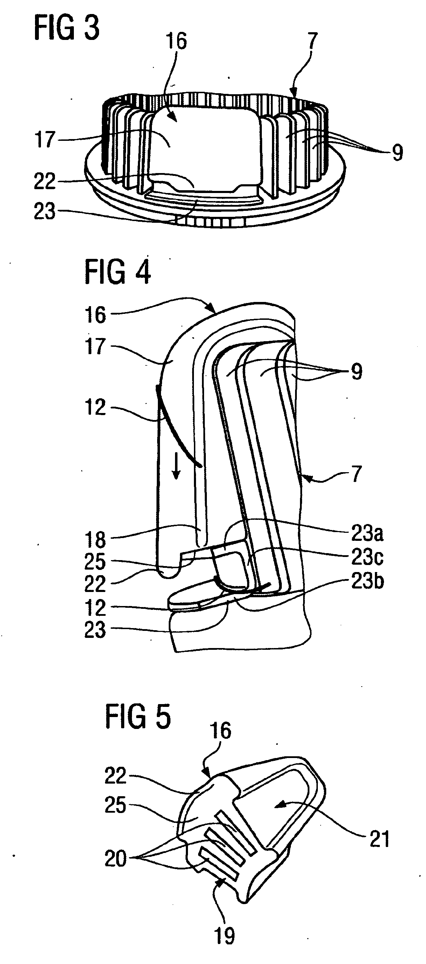

Um diese nachteiligen Wirkungen beim Wickelvorgang zu verhindern, werden die Trennstege 9 in einem Überbrückungsbereich 15 mittels eines in FIG 3 bis 6 gezeigten Wickelhilfskörpers 16 bedeckt und somit geschützt. Der Wickelhilfskörper 16 ist als Wickelschuh ausgebildet und hat die Gestalt eines Kreisbogenabschnitts. Seine Außenwand 17 ist glatt und hat abgerundete Außenrandkanten 18. Er weist eine abgerundete Oberflächenkontur auf und ist im Ausführungsbeispiel aus Aluminium hergestellt.

Bei der Bewicklung des Grundkörpers 2 erfolgt die Umlenkung und Führung der elektrischen Leiter 12 nicht mehr mittels der Trennstege 9 der Endscheiben 7 oder 8, sondern mittels des Wickelhilfskörpers 16. Zur Herstellung einer Teilwicklung mit mehreren Windungen wird jeweils ein Wickelhilfskörper 16 an einer der beiden Stirnseiten 5 und 6 so angeordnet, dass er innerhalb des in Umfangsrichtung verlaufenden Überbrückungsbereichs 15 die während dieses Teilwickelvorgangs nicht zu bewickelnden Nutstirnöffnungen 14 abdeckt. Der elektrische Leiter 12 wird in eine der Nuten 10, deren Nutstirnöffnung 14 auf einer der in Umfangsrichtung weisenden Seite des Überbrückungsbereichs 15 liegt, eingelegt und durch die zugehörige unabgedeckte Nutstirnöffnung 14 herausgeführt. Dann wird er an der betreffenden Stirnseite 5 oder 6 mittels des Wickelhilfskörpers 16 umgelenkt und zu einer weiteren unabgedeckten der Nutstirnöffnungen 14, die auf der anderen in Umfangsrichtung weisenden Seite des Überbrückungsbereichs 15 liegt, geführt, um dort in die zugehörige Nut 10 eingelegt und zur anderen Stirnseite 6 bzw. 5 geführt zu werden. Dort wiederholt sich der Vorgang spiegelbildlich, so dass eine komplette Windung hergestellt wird. Je nach vorgesehener Windungszahl wird dieser für eine Windung beschriebene Vorgang wiederholt. Nach Abschluss dieses Teilwickelvorgangs werden die auf beiden Stirnseiten 5 und 6 hilfsweise angeordneten Wickelhilfskörper 16 wieder entfernt. Der beschriebene Wickelvorgang lässt sich insbesondere automatisch mittels eines Nadelwicklers durchführen.

An einer Unterseite 19 des Wickelhilfskörpers 16 sind Befestigungsaussparungen 20 vorgesehen, die von der Unterseite 19 ausgehend in den Wickelhilfskörper 16 hineinreichen. Die Befestigungsaussparungen 20 dienen zur Aufnahme der Trennstege 9. Auch an seinen beiden in Umfangsrichtung weisenden Seitenwangen hat der Wickelhilfskörper 16 jeweils eine seitliche Aussparung 21, mittels der jeweils einer der beiden am Rand des Überbrückungsbereichs 15 angeordneten Trennstege 9 gehalten und geschützt wird.

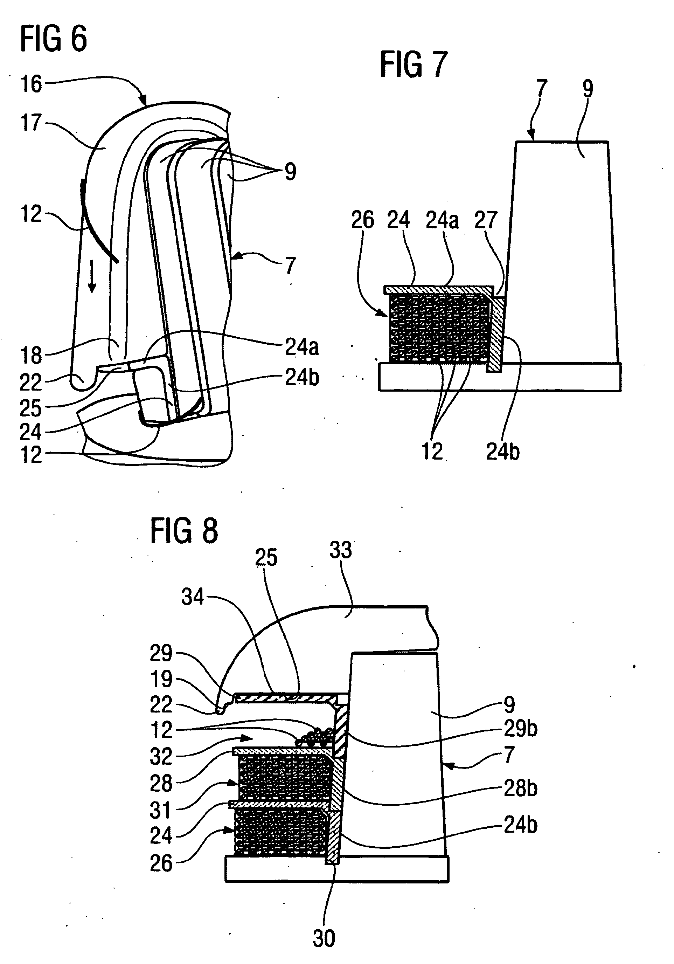

Die Außenwand 17 hat einen über die Unterseite 19 hinausreichenden Vorsprung 22, der sich in Umfangsrichtung nicht über den gesamten Kreisbogenabschnitt erstreckt, den der übrige Wickelhilfskörper 16 abdeckt. Der Vorsprung 22 dient wie auch die glatte Außenwand 17 zur gezielten Führung der elektrischen Leiter 12. Der gerade einzubringende elektrische Leiter 12 wird im Zusammenhang mit der Umlenkung im Außenbereich des Grundkörpers 2 über die glatte Außenwand 17 des Wickelhilfskörpers 16 geführt und - wie in FIG 4 und 6 durch die Richtungspfeile angedeutet - nach unten gezogen. Der am Ende in dieser Bewegungsrichtung vorgesehene Vorsprung 22 lässt den elektrischen Leiter 12 gezielt in ein zwischen dem Wickelhilfskörper 16 und der Endscheibe 7 angeordnetes Führungselement 23 mit U-Profil (FIG 3 und 4) oder Führungselement 24 mit L-Profil (FIG 6) hineinrutschen oder -gleiten. Das U-profilierte Führungselement 23 hat zwei U-Schenkel 23a und 23b sowie einen U-Boden 23c. Das L-profilierte Führungselement 24 hat einen L-Schenkel 24a sowie einen L-Boden 24b. Beide Führungselemente 23 und 24 sind außerdem kreisbogenförmig ausgebildet. Im in FIG 4 und 6 gezeigten Zustand befindet sich jeweils eine Windung des elektrischen Leiters 12 bereits in dem jeweils zugehörigen Führungselement 23 bzw. 24, während die nächste Windung gerade hergestellt wird, wobei der elektrische Leiter 12 an der glatten Außenwand 17 des Wickelhilfskörpers 16 entlang geführt wird.

An der Unterseite 19 des Wickelhilfskörpers 16 ist angrenzend an den Vorsprung 22 eine Anlagefläche 25 für das Führungselement 23 oder 24 vorgesehen. Mittels der Anlagefläche 25 wird das Führungselement 23 und 24 so in seiner Lage fixiert, dass es während des Wickelvorgangs zu keiner unerwünschten Positionsverschiebung kommt. Die Führungselemente 23 und 24 haben eine elektrisch isolierende Funktion, die aufgrund dieser vorteilhaften Lagefixierung nach dem Wickelvorgang in vollem Umfang gewährleistet ist. Bei anderen bekannten Isolierungen von Teilwicklungen des Wicklungssystems 13 kann es unter dem Einfluss von Zugspannungen während des Wickelvorgangs zu einer Verschiebung der Isolierung und damit zu einer Verschlechterung der isolierenden Eigenschaften kommen. Dieser Nachteil wird durch die Lagefixierung des Führungselements 23 oder 24 umgangen.

Der Wickelhilfskörper 16 ermöglicht eine weitgehend gleichmäßige Bewicklung der Führungselemente 23 und 24 mit den einzelnen Windungen des elektrischen Leiters 12. Die Abmessungen einer so hergestellten und in FIG 7 gezeigten Teilwicklung 26 können vorab über eine entsprechende Dimensionierung des Wickelhilfskörpers 16 und des Führungselements 23 bzw. 24 voreingestellt werden. Insbesondere wird dadurch eine gute Raumausnutzung vor allem in radialer Richtung erreicht. Bei anderen Bewicklungsverfahren, die ohne den Wickelhilfskörper 16 und das Führungselement 23 oder 24 arbeiten, erstrecken sich die resultierenden Teilwicklungen mehr in axiale und weniger in radiale Richtung. Dadurch ergibt sich ein axial längerer Gesamtaufbau. Demgegenüber zeichnet sich die elektrische Maschine 1, die mit dem günstigen Bewicklungsverfahren und unter Verwendung der günstigen Führungselemente 23 und 24 bewickelt wird, durch eine deutlich bessere Raumausnutzung und damit durch eine kürzere axiale Ausdehnung aus. Das günstige Bewicklungsverfahren und die günstigen Führungselemente 23 und 24 können dabei entweder in Kombination oder auch als Einzelmaßnahme, also entweder das Bewicklungsverfahren oder die Führungselemente 23 und 24, zum Einsatz kommen.

Außerdem liegt das so resultierende Wicklungssystem 13 auch im Bereich der Stirnseiten 5 und 6, in denen nicht näher dargestellte Wickelköpfe gebildet werden, sehr eng an dem Grundkörper 2 an, so dass eine gute thermische Ankopplung gegeben ist. Dies wirkt sich günstig auf die Abfuhr der in den elektrischen Leitern 12 im Bereich der Wickelköpfe entstehenden Wärme über das Ständer-Blechpaket des Grundkörpers 2 aus.

Gemäß der Darstellung von FIG 7 weist das L-profilierte Führungselement 24 im Außenbereich der Knickkante zwischen dem L-Schenkel 24a und dem L-Boden 24b eine Ausnehmung 27 aufweist, in die ein L-Boden 28b eines weiteren L-profilierten Führungselements 28 eingreifen kann. So kann ein in axialer Richtung gestapelter und lagefixierter Aufbau mehrerer Führungselemente 24 bzw. 28 realisiert werden. Beispielhaft ist in FIG 8 eine Ausführungsform mit drei benachbart zueinander gestapelten Führungselementen 24, 28 und 29 gezeigt. Dabei sind die L-Böden 28b und 29b der Führungselemente 28 bzw. 29 in der Ausnehmung 27 des darunter liegenden Führungselements 24 bzw. 28 und der L-Boden 24b des untersten Führungselements 24 in einer analog ausgestalteten Ausnehmung 30 der Endscheibe 7 festgelegt.

Das Ausführungsbeispiel gemäß FIG 8 zeigt einen Zustand, bei dem die Führungselemente 24 und 28 bereits vollständig mit der Teilwicklung 26 bzw. mit einer Teilwicklung 31 bewickelt sind. Dagegen wird das dritte Führungselement 29 gerade mit den elektrischen Leitern 12 einer weiteren Teilwicklung 32 bewickelt.

Die Führung der elektrischen Leiter 12 erfolgt mittels eines Wickelhilfskörpers 33, der auf die Trennstege 9 der Endscheibe 7 aufgesetzt ist. Im Unterschied zum Wickelhilfskörper 16 ist seine Übergreifweite jedoch an die in axialer Richtung längere Abmessung des Stapelaufbaus aus den drei Führungselementen 24, 28 und 29 angepasst. Außerdem ist die Anlagefläche 25 für das dritte Führungselement 29 mittels einer Vertiefung 34 an der Unterseite 19 des Wickelhilfskörpers 33 ausgebildet. Dies ergibt eine sehr gute Lagefixierung des dritten Führungselements 29.

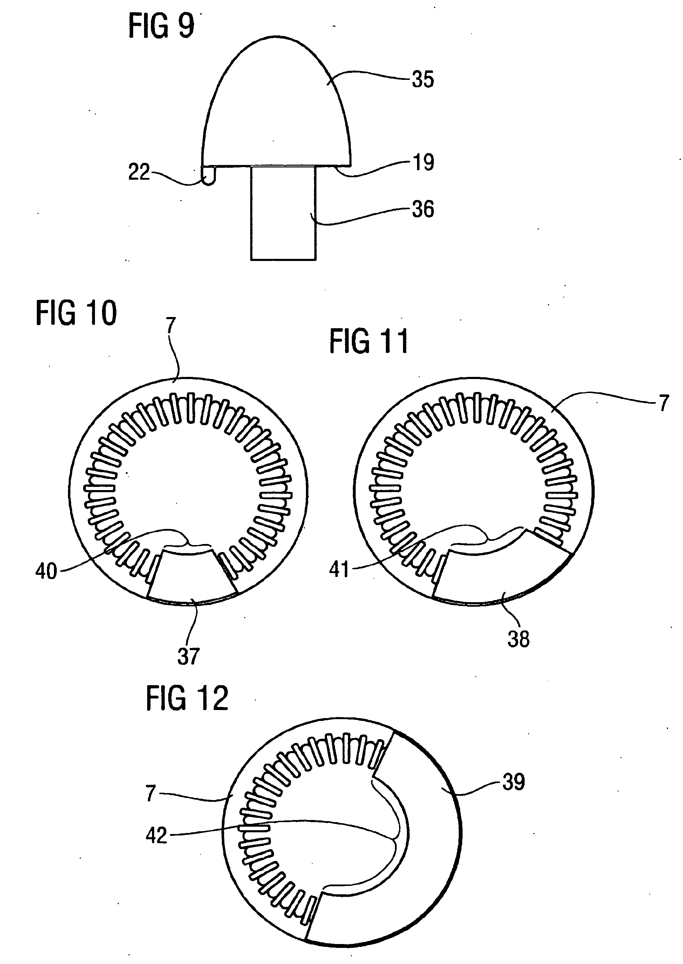

In FIG 9 ist ein weiteres Ausführungsbeispiel eines Wickelhilfskörpers 35 dargestellt. Im Unterschied zu den Wickelhilfskörpern 16 und 33 weist der Wickelhilfskörper 35 an seiner Unterseite 19 anstelle der Befestigungsaussparungen 20 mindestens einen Befestigungsfortsatz 36 auf, der sich axial nach unten von der Unterseite 19 wegerstreckt und zum Eingriff in eine der Nuten 10 des Grundkörpers 2 bestimmt ist. Für die Dauer des Wickelvorgangs wird der Wickelhilfskörper 35 also unmittelbar am Grundkörper 2 eingesteckt. Eine Endscheibe 7 oder 8 wie bei den vorstehend beschriebenen Ausführungsbeispielen ist nicht erforderlich.

In FIG 10 bis 12 sind weitere Ausführungsbeispiele für Wickelhilfskörper 37, 38 bzw. 39 gezeigt, die in Verbindung mit der Endscheibe 7 oder 8 während des Wickelvorgangs eingesetzt werden. Sie unterscheiden sich in der Größe des jeweils abgedeckten Kreisbogenabschnitts. Die Wickelhilfskörper 37 bis 39 sind jeweils für unterschiedliche Ausführungsformen der elektrischen Maschine 1 bestimmt. Insbesondere lassen sich so Wicklungssysteme 13 mit verschiedenen Polzahlen realisieren.

Die Wickelhilfskörper 37 bis 39 haben jeweils einen anderen Überdeckungsbereich 40, 41 bzw. 42. Es wird jeweils eine andere Zahl an Nutstirnöffnungen 14 abgedeckt und für die Führung des elektrischen Leiters 12 überbrückt. Die jeweils mit eingesetzten - in FIG 10 bis 12 nicht sichtbaren - Führungselemente überdecken den gleichen Kreisbogenabschnitt wie die Wickelhilfskörper 37 bis 39.

Durch den Einsatz der Wickelhilfskörper 16, 33, 35, 37, 38 oder 39 und insbesondere auch der Führungselemente 23, 24, 28 oder 29 wird eine exakte Formung des Wicklungssystems 13 im Bereich der Stirnseiten 5 und 6, also eine exakte Formung der Wickelköpfe, erreicht. Insbesondere lassen sich auf diese Weise Wickelköpfe mit einer vergleichsweise großen radialen und kurzen axialen Abmessung realisieren. Insbesondere wird der radiale Platz bis zum Außenumfang des Grundkörpers 2 praktisch vollständig genutzt. Aufgrund dieser guten Raumausnutzung in radialer Richtung resultiert die Verkürzung in axialer Richtung, so dass auch andere Komponenten der elektrischen Maschine 1 wie z. B. das Gehäuse und/oder die Lagerschilde axial verkürzt ausgeführt werden können. Dadurch reduziert sich der Materialeinsatz. Außerdem werden die elektrischen Betriebsdaten der elektrischen Maschine verbessert. So erhöht sich beispielsweise der Wirkungsgrad aufgrund geringerer Kupferverluste.

Außerdem ermöglicht der Einsatz der Wickelhilfskörper 16, 33, 35, 37, 38 oder 39 und insbesondere auch der Führungselemente 23, 24, 28 oder 29 eine vergleichbare Ausgestaltung der verschiedenen Teilwicklungen 26, 31, und 32 des Wicklungssystems 13. Insbesondere haben diese Teilwicklungen 26, 31, und 32 eine praktisch gleiche oder zumindest sehr ähnliche mittlere Spulenlänge sowie einen im Wesentlichen gleichen elektrischen Widerstand.

## Patentansprüche

1. Verfahren zur Bewicklung einer elektrischen Maschine (1), die eine Drehachse (3) und einen Grundkörper (2) mit zwei axialen Stirnseiten (5,6) sowie mit Nuten (10) zur Aufnahme von elektrischen Leitern (12) eines Wicklungssystems (13) enthält, wobei die Nuten (10) an den Stirnseiten (5,6) jeweils eine Nutstirnöffnung (14) aufweisen, und zur Herstellung einer ersten Teilwicklung (26) des Wicklungssystems (13)
a) an zumindest einer der Stirnseiten (5,6) ein Wickelhilfskörper (16;33;37;38;39) so angeordnet wird, dass er innerhalb eines in Umfangsrichtung verlaufenden Überbrückungsbereichs (15;40;41;42) mindestens eine der Nutstirnöffnungen (14) abdeckt,
b) die elektrischen Leiter (12)
b1) in mindestens eine der Nuten (10), deren Nutstirnöffnung (14) auf einer Seite des Überbrückungsbereichs (15;40;41;42) liegt, eingelegt und durch die unabgedeckte Nutstirnöffnung (14) herausgeführt werden,
b2) an der Stirnseite (5, 6) mittels des Wickelhilfskörpers (16;33;37;38;39) umgelenkt und zu einer weiteren unabgedeckten der Nutstirnöffnungen (14), die auf der anderen Seite des Überbrückungsbereichs (15;40; 41;42) liegt, geführt werden,
c) an der Stirnseite (5,6) eine Endscheibe (7,8) mit axial vorstehenden Trennelementen (9) angeordnet wird, und der Wickelhilfskörper (16;33;37;38;39) axiale Befestigungsaussparungen (20) aufweist, mit denen er zur Anordnung an der Stirnseite (5,6) auf die Trennelemente (9) aufgesteckt wird, wobei zwischen den Nuten (10) Nutstege (11) angeordnet sind und die Endscheiben (7,8) so an den Stirnseiten (5,6) angeordnet werden, dass die Trennelemente (9) mit den Nutstegen (11) fluchten und
d) der Wickelhilfskörper (16;33;37;38;39) nach Fertigstellung der ersten Teilwicklung (26) wieder entfernt wird.

2. Verfahren nach Anspruch 1, **dadurch gekennzeichnet, dass** zwischen der Stirnseite (5, 6) und dem Wickelhilfskörper (16;33;37;38;39) im Überbrückungsbereich (15;40;41;42) ein erstes Führungselement (23;24) platziert wird, in dem die elektrischen Leiter (12) nach der Führung mittels des Wickelhilfskörpers (16;33;35;37;38;39) zu liegen kommen.

3. Verfahren nach Anspruch 2, **dadurch gekennzeichnet, dass** das erste Führungselement (23;24) während der Herstellung der ersten Teilwicklung (26) mittels des Wickelhilfskörpers (16;33;37;38;39) in seiner Lage fixiert wird.

4. Verfahren nach Anspruch 2, **dadurch gekennzeichnet, dass** nach Fertigstellung der ersten Teilwicklung (26) axial angrenzend an das erste Führungselement (24) ein weiteres Führungselement (28;29) zur Aufnahme der elektrischen Leiter (12) einer weiteren Teilwicklung (31;32) platziert wird.

5. Verfahren nach Anspruch 4, **dadurch gekennzeichnet, dass** am weiteren Führungselement (29) ein weiterer Wickelhilfskörper (33) angeordnet wird, mittels dessen während der Herstellung der weiteren Teilwicklung (32) die elektrischen Leiter (12) geführt werden.

6. Wickelhilfskörper zur Durchführung des Verfahrens nach einem der vorhergehenden Ansprüche, der zur weitgehend gleitenden Führung von elektrischen Leitern (12) zu der weiteren unabgedeckten der Nutstirnöffnungen (14) der elektrischen Maschine (1) eine glatte Außenwand (17) mit abgerundeten Außenwandkanten (18) und mit insbesondere abgerundeter Oberflächenkontur aufweist und der zur Herstellung der ersten Teilwicklung (26) des Wicklungssystems (13) an zumindest einer der Stirnseiten (5,6) so angeordnet wird, dass er innerhalb eines in Umfangsrichtung verlaufenden Überbrückungsbereichs (15;40;41;42) mindestens eine der Nutstirnöffnungen (14) abdeckt und axiale Befestigungsaussparungen (20) vorgesehen sind, die sich ausgehend von einer annähernd senkrecht zur Außenwand (17) verlaufenden Unterseite (19) in den Wickelhilfskörper (16;33;37;38;39) hineinerstrecken, wobei die axialen Befestigungsaussparungen (20) auf die Trennelemente (9) einer an der Stirnseite (5,6) des Grundkörpers (2) angeordneten Endscheibe (7,8) aufsteckbar sind, wobei die Endscheiben (7,8) so an den Stirnseiten (5,6) angeordnet werden, dass die Trennelemente (9) mit den Nutstegen (11) fluchten.

7. Wickelhilfskörper nach Anspruch 6, **dadurch gekennzeichnet, dass** die Unterseite (19) zumindest teilweise als Anlagefläche (25) für ein Führungselement (23;24;28;29) der elektrischen Leiter (12) ausgebildet ist.

8. Wickelhilfskörper nach Anspruch 7, **dadurch gekennzeichnet, dass** die Anlagefläche (25) als Vertiefung (34) an der Unterseite (19) ausgebildet ist.

9. Wickelhilfskörper nach Anspruch 7, **dadurch gekennzeichnet, dass** die Außenwand (17) einen Vorsprung (22) aufweist, der sich über die Anlagefläche (25) der Unterseite (19) hinauserstreckt.

## Claims

1. Method for winding an electrical machine (1), which contains a rotation axis (3) and a base body (2) with two axial end faces (5, 6) and with slots (10) for holding electrical conductors (12) of a winding system (13), with the slots (10) each having a slot end opening (14) on the end faces (5, 6) and, in order to produce a first winding element (26) of the winding system (13)
a) a winding auxiliary body (16; 33; 37; 38; 39) is arranged on at least one of the end faces (5, 6) such that it covers at least one of the slot end openings (14) within a bridging area (15; 40; 41; 42) which runs in the circumferential direction,
b) the electrical conductors (12)
b1) are inserted in at least one of the slots (10), whose slot end opening (14) is located on one side of the bridging area (15; 40; 41; 42) and are passed through the uncovered slot end opening (14),
b2) are deflected by means of the winding auxiliary body (16; 33; 37; 38; 39) on the end face (5, 6) and are passed to a further uncovered one of the slot end openings (14), which is located on the other side of the bridging area (15; 40; 41; 42),
c) an end plate (7, 8) with axially projecting separating elements (9) is arranged on the end face (5, 6), and the winding auxiliary body (16; 33; 37; 38; 39) has axial attachment cutouts (20), by means of which it is plugged onto the separating elements (9) for arrangement on the end face (5, 6), with slot webs (11) being arranged between the slots (10) and the end plates (7, 8) being arranged on the end faces (5, 6), such that the separating elements (9) are aligned with the slot webs (11), and
d) the winding auxiliary body (16; 33; 37; 38; 39) is removed again after completion of the first winding element (26).

2. Method according to Claim 1, **characterized in that** a first guide element (23; 24) is placed between the end face (5, 6) and the winding auxiliary body (16; 33; 37; 38; 39) in the bridging area (15; 40; 41; 42), in which first guide element (23; 24) the electrical conductors (12) are located after guidance by means of the winding auxiliary body (16; 33; 35; 37; 38; 39).

3. Method according to Claim 2, **characterized in that** the first guide element (23; 24) is fixed in its position by means of the winding auxiliary body (16; 33; 37; 38; 39) during the production of the first winding element (26).

4. Method according to Claim 2, **characterized in that**, after completion of the first winding element (26), a further guide element (28; 29) is placed axially adjacent to the first guide element (24), in order to hold the electrical conductors (12) of a further winding element (31; 32).

5. Method according to Claim 4, **characterized in that** a further winding auxiliary body (33) is arranged on the further guide element (29), by means of which the electrical conductors (12) are guided during the production of the further winding element (32).

6. Winding auxiliary body for carrying out the method according to one of the preceding claims, which winding auxiliary body has a smooth outer wall (17) with rounded outer wall edges (18) and in particular with a rounded surface contour in order to guide electrical conductors (12) such that they largely slide to the further uncovered one of the slot end openings (14) of the electrical machine (1) and which, in order to produce the first winding element (26) of the winding system (13), is arranged on at least one of the end faces (5, 6) such that it covers at least one of the slot end openings (14) within a bridging area (15; 40; 41; 42) which runs in a circumferential direction, and axial attachment cutouts (20) are provided, which extend into the winding auxiliary body (16; 33; 37; 38; 39), starting from a lower face (19) which runs approximately at right angles to the outer wall (17), in which case the axial attachment cutouts (20) can be plugged onto the separating elements (9) of an end plate (7, 8) which is arranged on the end face (5, 6) of the base body (2), and with the end plates (7, 8) being arranged on the end faces (5, 6) such that the separating elements (9) are aligned with the slot webs (11).

7. Winding auxiliary body according to Claim 6, **characterized in that** the lower face (19), is at least partially in the form of a contact surface (25) for a guide element (23; 24; 28; 29) of the electrical conductors (12).

8. Winding auxiliary body according to Claim 7, **characterized in that** the contact surface (25) is in the form of a depression (34) on the lower face (19).

9. Winding auxiliary body according to Claim 7, **characterized in that** the outer wall (17) has a projection (22) which extends beyond the contact surface (25) on the lower face (19).

## Revendications

1. Procédé pour effectuer un enroulement dans une machine ( 1 ) électrique qui comporte un axe ( 3 ) de rotation et un corps ( 2 ) de base ayant deux côtés ( 5, 6 ) frontaux axiaux ainsi que des encoches ( 10 ) de logement de conducteurs ( 12 ) électriques d'un système ( 13 ) d'enroulement, les encoches ( 10 ) ayant respectivement une ouverture ( 14 ) frontale d'encoche sur les côtés ( 5, 6 ) frontaux et, pour ménager un premier enroulement ( 26 ) partiel du système ( 13 ) d'enroulement,
a) un corps ( 16 ; 33 ; 37 ; 38 ; 39 ) auxiliaire d'enroulement est disposé sur au moins l'un des côtés ( 5, 6 ) frontaux de manière à ce qu'il recouvre dans une zone ( 15 ; 40 ; 41 ; 42 ) de superposition s'étendant dans la direction périphérique au moins l'une des ouvertures ( 14 ) frontales d'encoche,
b) les conducteurs ( 12 )
b1) sont insérés dans au moins l'une des encoches ( 10 ), dont l'ouverture ( 14 ) frontale d'encoche se trouve sur un côté de la zone ( 15 ; 40 ; 41 ; 42 ) de superposition et sont sortis par l'ouverture ( 14 ) frontale d'encoche non recouverte,
b2) sont déviés sur le côté ( 5, 6 ) frontal au moyen du corps ( 16 ; 33 ; 37 ; 38 ; 39 ) auxiliaire d'enroulement et sont guidés vers une autre non recouverte des ouvertures ( 14 ) frontales d'encoche, qui se trouve de l'autre côté de la zone ( 15 ; 40 ; 41 ; 42 ) de superposition,
c) sur le côté ( 5, 6 ) frontal est disposé un flasque ( 7, 8 ) d'extrémité ayant des éléments ( 9 ) de séparation en saillie axialement et le corps ( 16 ; 33 ; 37 ; 38 ; 39 ) auxiliaire d'enroulement a des évidements ( 20 ) axiaux de fixation par lesquels il est, pour le montage, enfilé du côté ( 5, 6 ) frontal sur les éléments ( 9 ) de séparation, des nervures ( 11 ) étant disposées entre les encoches ( 10 ) et les flasques ( 7, 8 ) d'extrémité étant disposés sur les côtés ( 5, 6 ) frontaux de manière à ce que les éléments ( 9 ) de séparation soient alignés avec les nervures ( 11 ) et,
d) le corps ( 16 ; 33 ; 37 ; 38 ; 39 ) auxiliaire d'enroulement est retiré après achèvement du premier enroulement ( 26 ) partiel.

2. Procédé suivant la revendication 1, **caractérisé en ce qu'**entre les côtés ( 5, 6 ) frontaux et le corps ( 16 ; 33 ; 37 ; 38 ; 39 ) auxiliaire d'enroulement est placé, dans la zone ( 15 ; 40 ; 41 ; 42 ) de superposition, un premier élément ( 23 ; 24 ) de guidage, dans lequel les conducteurs ( 12 ) électriques viennent se mettre après le guidage au moyen du corps ( 16 ; 33 ; 37 ; 38 ; 39 ) auxiliaire d'enroulement.

3. Procédé suivant la revendication 2, **caractérisé en ce que** le premier élément ( 23 ; 24 ) de guidage est immobilisé en sa position au moyen du corps ( 16 ; 33 ; 37 ; 38 ; 39 ) auxiliaire d'enroulement pendant la production du premier enroulement ( 26 ) partiel.

4. Procédé suivant la revendication 2, **caractérisé en ce qu'**après l'achèvement du premier enroulement ( 26 ) partiel on place au voisinage du premier élément ( 24 ) de guidage un autre élément ( 28 ; 29 ) de guidage pour la réception des conducteurs ( 12 ) électriques d'un autre enroulement ( 31 ; 32 ) partiel.

5. Procédé suivant la revendication 4, **caractérisé en ce que** sur l'autre élément ( 29 ) de guidage est monté un autre corps ( 33 ) auxiliaire d'enroulement, au moyen duquel les conducteurs ( 12 ) électriques sont guidés pendant la production de l'autre enroulement ( 32 ) partiel.

6. Corps auxiliaire d'enroulement pour la mise en oeuvre du procédé suivant l'une des revendications précédentes, qui, pour le guidage dans une grande mesure glissant de conducteurs ( 12 ) électriques vers les autres ouvertures ( 14 ) frontales d'encoches non recouvertes de la machine ( 1 ) électrique, a une paroi ( 17 ) extérieure lisse ayant des bords ( 18 ) extérieurs de paroi arrondis et ayant un contour de surface notamment arrondie et qui est disposé, pour la production du premier enroulement ( 26 ) partiel du système ( 13 ) d'enroulement, sur au moins l'un des côtés ( 5 ; 6 ) frontaux de manière à ce qu'il recouvre au moins l'une des ouvertures ( 14 ) frontales d'encoche dans une zone ( 15 ; 40 ; 41 ; 42 ) de superposition s'étendant dans la direction périphérique et il est prévu des évidements ( 20 ) axiaux de fixation, qui s'étendent à partir du côté ( 19 ) inférieur s'étendant à peu près perpendiculairement à la paroi ( 17 ) extérieure dans le corps ( 16 ; 33 ; 37 ; 38 ; 39 ) auxiliaire d'enroulement, les évidements ( 20 ) axiaux de fixation pouvant être enfilés sur les éléments ( 9 ) de séparation d'un flasque ( 7 ; 8 ) d'extrémité disposé sur le côté ( 5 ; 6 ) frontal du corps ( 2 ) de base, les flasques ( 7 ; 8 ) d'extrémité étant disposés sur les côtés ( 5 ; 6 ) frontaux de manière à ce que les éléments ( 9 ) de séparation soient alignés avec les nervures ( 11 ) des encoches.

7. Corps auxiliaire d'enroulement suivant la revendication 6, **caractérisé en ce que** le côté ( 19 ) inférieur est constitué au moins en partie sous la forme d'une surface ( 25 ) d'appui d'un élément ( 23 ; 24 ; 28 ; 29 ) de guidage des conducteurs ( 12 ) électriques.

8. Corps auxiliaire d'enroulement suivant la revendication 7, **caractérisé en ce que** la surface ( 25 ) d'appui est constituée sous la forme d'une cavité ( 34 ) sur le côté ( 19 ) inférieur.

9. Corps auxiliaire d'enroulement suivant la revendication 7, **caractérisé en ce que** la paroi ( 17 ) extérieure a une saillie ( 22 ) qui dépasse de la surface ( 25 ) d'appui du côté ( 19 ) inférieur.
